Europäisches Patentamt

European Patent Office

Office européen des brevets

(19)

(11) Veröffentlichungsnummer : **0 423 430 B1**

(12) **EUROPÄISCHE PATENTSCHRIFT**

(45) Veröffentlichungstag der Patentschrift :
**21.04.93 Patentblatt 93/16**

(51) Int. Cl.$^5$ : **A61K 6/00**, C09J 4/00

(21) Anmeldenummer : **90111505.5**

(22) Anmeldetag : **19.06.90**

(54) **Dentales Haftmittel.**

(30) Priorität : **19.10.89 DE 3934849**

(43) Veröffentlichungstag der Anmeldung :
**24.04.91 Patentblatt 91/17**

(45) Bekanntmachung des Hinweises auf die
Patenterteilung :
**21.04.93 Patentblatt 93/16**

(84) Benannte Vertragsstaaten :
**AT CH DE ES FR GB IT LI NL SE**

(56) Entgegenhaltungen :
**EP-A- 0 161 337**
**WO-A-85/00514**
**DE-C- 3 510 962**
**WPIL FILE SUPPLIER, AN=89-011217 [02],**
**Derwent Publications Ltd, Londen, GB; &**
**JP-A-63 286 484**

(73) Patentinhaber : **Heraeus Kulzer GmbH**
**Heraeusstr. 12 - 14**
**W-6450 Hanau (DE)**

(72) Erfinder : **Eppinger, Bernhard**
**Am Kirmesplatz 17**
**W-6290 Weilburg (DE)**
Erfinder : **Eppinger, Regina**
**Am Kirmesplatz 17**
**W-6290 Weilburg (DE)**
Erfinder : **Schaefer, Roland, Dr.**
**Merianweg 5**
**W-6382 Friedrichsdorf (DE)**

(74) Vertreter : **Grimm, Ekkehard**
**Heraeus Holding GmbH Heraeusstrasse 12 -**
**14**
**W-6450 Hanau/Main (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein dentales Haftmittel, das ein Acryloyloxyäthyldihydrogenphosphat und/oder Diacryloyloxyäthyl-hydrogenphosphat, einen Photopolymerisationskatalysator und ein organisches Lösungsmittel enthält.

Beim Füllen von Zahnkavitäten mit einem polymerisierbaren Zahnfüllungsmaterial auf Kunststoff-Basis wird zur Verbesserung der Haftung zwischen Zahnschmelz und Kunststoff der Zahnschmelz vor dem Legen der Füllung mit einer sauren Ätzlösung, zum Beispiel einer verdünnten Phosphorsäure-Lösung, behandelt und gegebenenfalls dann noch mit einem dünnflüssigen, meist monomere Dimethacrylate enthaltenden chemisch oder durch Photopolymerisation auszuhärtenden Versiegelungsmaterial bestrichen. Wegen ihrer guten physikalischen Eigenschaften haben sich Versiegelungsmaterialien, die zusätzlich zu den Monomeren einen feinteiligen anorganischen Füllstoff enthalten, besonders bewährt. Ihre Haftung beruht auf einer mechanischen Verankerung im geätzten Zahnschmelz.

Ein Ätzen des Dentins empfiehlt sich aus zahnärztlicher Sicht jedoch nicht. Daher werden, wenn eine Verankerung durch Schmelzätzung nicht möglich ist, zum Beispiel bei Zahnhalskavitäten, zur Verbesserung der Haftung zwischen Dentin und Kunststoff Haftmittel verwendet. Eine Vielzahl solcher dentaler Haftmittel ist bekannt, denn sie spielen zusammen mit der Anwendung von Komposit-Füllungen eine immer größere Rolle. Ein wesentliches Problem dabei scheint die initiale Polymerisationsschrumpfung des Komposits zu sein, die zu einer Spaltbildung zwischen Füllung und Zahnhartsubstanz führt. Die Folge ist das Eindringen von Bakterien, die die Pulpa schädigen und Sekundärkaries hervorrufen können.

In Adhesive Restorative Dental Materials 1961, 195 - 198, wird über die haftverbessernde Wirkung von Dimethacryloyloxyäthyl-hydrogenphosphat und einigen Methacryloyloxy-Gruppen enthaltenden Dihydrogenphosphaten berichtet.

Aus der deutschen Auslegeschrift 27 11 234 sind Klebemittel für Zähne und Zahnmaterialien bekannt, die als sauren Phosphorsäureester zum Beispiel Dimethacryloyloxyäthyl-hydrogenphosphat, gegebenenfalls zusammen mit anderen Monomeren, und als Polymerisationskatalysatoren zum Beispiel Amin/Peroxid-Systeme oder UV-Sensibilierungsmittel enthalten können.

In der europäischen Patentanmeldung 88 527 wird ein die Haftung verbesserndes Material ("adhesion promotor"), das aus einer Lösung eines mindestens drei Methacryloyloxy-Gruppen aufweisenden Dihydrogenphosphats in einem flüchtigen organischen Lösungsmittel, besonders einem Alkanol, besteht, beschrieben. Zusammen mit diesem Material kann, um die Haftung des Zahnfüllungsmaterials an der Zahnsubstanz zu verstärken, ein Haft- oder Versiegelungsmaterial ("intermediate bonding resin") verwendet werden.

Weitere die Haftung von photopolymerisierbaren Dentalmaterialien am Dentin verbessernde Haftmittel, die ebenfalls Methacryloyloxyäthylhydrogenphosphate und daneben einen Photopolymerisationskatalysator enthalten, sind aus den deutschen Patentschriften 34 14 163 und 34 14 165 bekannt.

Es sind auch polymerisierbare Gruppen enthaltende Carbonsäuren und Carbonsäurederivate bekannt, die eine gute Haftung zur Zahnhartsubstanz zeigen, wie 4-Methacryloyloxyäthyltrimellithsäure und deren Anhydrid, Pyromellithsäuredimethacryloyloxyäthylester, im Alkoholrest Acryloyloxy- oder Methacryloyloxy-Gruppen aufweisende Ester von Carboxynaphthalindicarbonsäureanhydriden (deutsche Patentschrift 35 10 962) und ω -(Meth)Acryloyloxy-α,α-alkandicarbonsäuren (europäische Patentanmeldung 206 810).

Die deutsche Offenlegungsschrift 35 36 077 betrifft oligomere oder präpolymere Verbindungen mit sowohl polymerisierbaren ungesättigten Gruppen als auch Säureresten, deren Salzen oder deren aktiven Derivatresten, besonders mit Carboxylat- Phosphat-, Phosphonat-, Sulfonat- und Boratresten und deren reaktiven Derivaten. Diese Verbindungen enthaltende polymerisierbare Mischungen können als haftvermittelnde polymerisierbare Schichten zwischen Zahnsubstanz und polymerisierbarem Kunststoffmaterial verwendet werden.

Das in der europäischen Patentanmeldung 282 280 beschriebene der Verbesserung der Haftung von Komposit-Material an Schmelz und Dentin dienende Mittel enthält polymerisierbare Verbindungen mit Säure-Resten im Molekül, zum Beispiel aromatische Carbonsäuren oder Phosphorsäuren mit Acryloyloxy- oder Methacryloyloxy-Gruppen, zum Beispiel 4-Methacryloyloxyäthoxycarbonylphthalsäure oder deren Anhydrid.

Das aus der europäischen Patentanmeldung 310 919 bekannte Haftmittel zur Verbesserung der Haftung zwischen Zahnsubstanz und Komposit-Material enthält einen Fluoralkylester der Acrylsäure, Fluoracrylsäure oder Methacrylsäure und/oder dessen Polymer oder Copolymer und gegebenenfalls daneben noch weitere die Haftung verbessernde Monomere mit zum Beispiel Carbonsäure-, Phosphorsäure-, Mercapto- oder Sulfonsäure-Gruppen. Es kann durch chemische Polymeri- sation oder durch Photopolymerisation ausgehärtet werden.

Es ist die Aufgabe der Erfindung, ein Mittel der eingangs charakterisierten Art, mit dem sich die Haftfestigkeit zwischen der Zahnhartsubstanz, besonders dem Dentin, und photopolymerisierbaren Dentalmaterialien verbessern läßt, zu finden. Durch die Anwendung des Mittels soll vor allem die durch die initiale Polymerisationsschrumpfung verursachte Bildung von Randspalten und die dadurch bedingte Sekundärkaries verhindert werden.

Das die Lösung der Aufgabe darstellende Haftmittel ist dadurch gekennzeichnet, daß es aus 1 - 25 Gewichts-% (Meth)Acryloyloxyäthyl-dihydrogenphosphat und/oder Di(meth)acryloyloxyäthyl-hydrogenphosphat, 3 - 40 Gewichts-% mindestens eines sauren Carbonsäureesters aus der Gruppe Dicarbonsäuremono(meth)acryloyloxyäthylester, o-Trimellithsäuremono(meth)acryloyloxyäthylester und Pyromellithsäuredin(meth)acryloyloxyäthylester, 0,05 - 5 Gewichts-% des Photopolymerisationskatalysators und Äthanol als Rest besteht.

Vorzugsweise besteht das Haftmittel aus 5 - 20 Gewichts-% (Meth)Acryloyloxyäthyl-dihydrogenphosphat und/oder Di(meth)acryloyloxyäthyl-hydrogenphosphat, 5 - 30 Gewichts-% mindestens eines sauren Carbonsäureesters aus der Gruppe Dicarbonsäuremono(meth)acryloyloxyäthylester, o-Trimellithsäuremono(meth)acryloyloxyäthylester und Pyromellithsäuredi(meth)acryloyloxyäthylester, 0,1 - 2 Gewichts-% des Photopolymerisationskatalysators und Äthanol als Rest.

Als Dicarbonsäuremono(meth)acryloyloxyäthylester haben sich besonders die Monoacryloyloxyäthylester und/oder Monomethacryloyloxyäthylester von Alkandicarbonsäuren mit 1 - 6 C-Atomen im Alkanrest, Maleinsäure, Benzoldicarbonsäuren und Cyclohexandicarbonsäuren bewährt.

Haftmittel, die ein Gemisch zweier der ungesättigten Carbonsäureester enthalten, haben sich als besonders günstig erwiesen.

Als Photopolymerisationskatalysatoren haben sich Ketone, wie sie beispielsweise aus GB-PS 1 408 265 bekannt sind, bewährt. Bevorzugt wird Campherchinon.

Das erfindungsgemäße Haftmittel dient der Verbesserung der Haftung von photopolymerisierbaren Zahnfüllungsmaterialien sowohl am Schmelz als auch am Dentin. Es kann dabei allein oder zusammen mit einem photopolymerisierbaren Versiegelungsmaterial angewandt werden. Es ist aber auch möglich, das Haftmittel nur zusammen mit dem Versiegelungsmaterial einzusetzen, wenn mit letzterem zum Beispiel Kauflächen oder freiliegende Zahnhälse versiegelt werden sollen.

Bei der Anwendung des erfindungsgemäßen Haftmittels fallen besonders die hohen Werte für die Haftfestigkeit unmittelbar nach Aushärtung des Zahnfüllungsmaterials (Initialhaftfestigkeit) und nach 24stündiger Lagerung in 37°C warmem Wasser auf. Überraschenderweise führt die gemeinsame Verwendung des ungesättigten Phosphats und des ungesättigten sauren Carbonsäureesters zu einer doppelt so hohen Haftfestigkeit wie die alleinige Verwendung von Phosphat beziehungsweise saurem Ester. Randspalten zwischen der Zahnsubstanz und dem Füllungsmaterial treten nicht auf; denn die sehr gute Initialhaftung wirkt der durch die Schrumpfung des Zahnfüllungsmaterials während der Polymerisation bedingten Spaltbildung entgegen.

Zur näheren Erläuterung wird in den folgenden Beispielen die Zusammensetzung von Haftmitteln gemäß der Erfindung näher beschrieben. Die mit diesen Haftmitteln unter Verwendung eines photopolymerisierbaren Versiegelungsmaterials erreichte Haftfestigkeit zwischen Dentin und Kunststoff-Zahnfüllung (Komposit-Zahnfüllung) und zwischen Zahnschmelz und Kunststoff-Zahnfüllung wird bestimmt.

Beispiel 1

| 5,0 % | Dimethacryloyloxyäthyl-hydrogenphosphat |
|---|---|
| 15,0 % | Maleinsäuremonomethacryloyloxyäthylester |
| 79,9 % | Äthanol |
| 0,1 % | Campherchinon |

Beispiel 2

| 5,0 % | Dimethacryloyloxyäthyl-hydrogenphosphat |
|---|---|
| 15,0 % | Phthalsäuremonomethacryloyloxyäthylester |
| 79,9 % | Äthanol |
| 0,1 % | Campherchinon |

Beispiel 3

| 5,0 % | Dimethacryloyloxyäthyl-hydrogenphosphat |
|---|---|
| 15,0 % | Bernsteinsäuremonomethacryloyloxyäthylester |
| 79,9 % | Äthanol |
| 0,1 % | Campherchinon |

EP 0 423 430 B1

Beispiel 4

| 5,0 % | Dimethacryloyloxyäthyl-hydrogenphosphat |
| 5,0 % | Phthalsäuremonomethacryloyloxyäthylester |
| 10,0 % | Maleinsäuremonomethacryloyloxyäthylester |
| 79,9 % | Äthanol |
| 0,1 % | Campherchinon |

Beispiel 5

| 5,0 % | Dimethacryloyloxyäthyl-hydrogenphosphat |
| 7,5 % | Phthalsäuremonomethacryloyloxyäthylester |
| 7,5 % | Maleinsäuremonomethacryloyloxyäthylester |
| 79,9 % | Äthanol |
| 0,1 % | Campherchinon |

Beispiel 6

| 5,0 % | Dimethacryloyloxyäthyl-hydrogenphosphat |
| 10,0 % | Phthalsäuremonomethacryloyloxyäthylester |
| 5,0 % | Maleinsäuremonomethacryloyloxyäthylester |
| 79,9 % | Äthanol |
| 0,1 % | Campherchinon |

Beispiel 7

| 5,0 % | Methacryloyloxyäthyl-dihydrogenphosphat |
| 15,0 % | Maleinsäuremonomethacryloyloxyäthylester |
| 79,9 % | Äthanol |
| 0,1 % | Campherchinon |

Beispiel 8

| 5,0 % | Methacryloyloxyäthyl-dihydrogenphosphat |
| 15,0 % | Bernsteinsäuremonomethacryloyloxyäthylester |
| 79,9 % | Äthanol |
| 0,1 % | Campherchinon |

Beispiel 9

| 5,0 % | Methacryloyloxyäthyl-dihydrogenphosphat |
| 5,0 % | Phthalsäuremonomethacryloyloxyäthylester |
| 10.0 % | Maleinsäuremonomethacryloyloxyäthylester |
| 79,9 % | Äthanol |
| 0,1 % | Campherchinon |

Beispiel 10

| 5,0 % | Methacryloyloxyäthyl-dihydrogenphosphat |
| 7,5 % | Phthalsäuremonomethacryloyloxyäthylester |
| 7,5 % | Maleinsäuremonomethacryloyloxyäthylester |
| 79,9 % | Äthanol |
| 0,1 % | Campherchinon |

Beispiel 11

| 5,0 % | Methacryloyloxyäthyl-dihydrogenphosphat |
| 10,0 % | Phthalsäuremonomethacryloyloxyäthylester |

4

| 5,0 % | Maleinsäuremonomethacryloyloxyäthylester |
|---|---|
| 79,9 % | Äthanol |
| 0,1 % | Campherchinon |

Beispiel 12

| 5,0 % | Methacryloyloxyäthyl-dihydrogenphosphat |
|---|---|
| 15,0 % | Pyromellithsäuredimethacryloyloxyäthylester |
| 79,9 % | Äthanol |
| 0,1 % | Campherchinon |

Beispiel 13

| 5,0 % | Methacryloyloxyäthyl-dihydrogenphosphat |
|---|---|
| 15,0 % | o-Trimellithsäuremonomethacryloyloxyäthylester |
| 79,9 % | Äthanol |
| 0,1 % | Campherchinon |

Beispiel 14 (Vergleich)

| 5,0 % | Methacryloyloxyäthyl-dihydrogenphosphat |
|---|---|
| 94,9 % | Äthanol |
| 0,1 % | Campherchinon |

Beispiel 15 (Vergleich)

| 15,0 % | Methacryloyloxyäthyl-dihydrogenphosphat |
|---|---|
| 84,9 % | Äthanol |
| 0,1 % | Campherchinon |

Beispiel 16 (Vergleich)

| 15,0 % | Maleinsäuremonomethacryloyloxyäthylester |
|---|---|
| 84,9 % | Äthanol |
| 0,1 % | Campherchinon |

Beispiel 17 (Vergleich)

| 15,0 % | Phthalsäuremonomethacryloyloxyäthylester |
|---|---|
| 84,9 % | Äthanol |
| 0,1 % | Campherchinon |

Jeweils eines der in den Beispielen beschriebenen Haftmittel wird auf die mit einer Diamantsäge plan gesägte, polierte, gereinigte (wässerige Äthylendiamintetraessigsäure-Lösung, pH 8,5) und getrocknete Dentinoberfläche eines extrahierten Zahnes aufgestrichen. Nach dem Verdunsten des Äthanols wird Estiseal®LC, ein photopolymerisierbares Versiegelungsmaterial der Firma Kulzer GmbH, aufgetragen und durch 20 Sekunden langes Bestrahlen mit dem Halogenlichtgerät Translux® der Firma Kulzer GmbH ausgehärtet. Anschließend wird Durafill, ein photopolymerisierbares Zahnfüllungsmaterial (Komposit) der Firma Kulzer GmbH, aufgebracht und durch 20 Sekunden langes Bestrahlen mit dem Halogenlichtgerät ebenfalls ausgehärtet.

Die so behandelten Zähne werden zur Bestimmung der Haftfestigkeit der Kunststoff-Füllung am Dentin Abscherversuchen unterworfen. Die dabei unmittelbar nach Aushärtung (maximal 30 Sekunden) und nach 24stündiger Lagerung in 37°C warmem Wasser gemessenen Werte werden in der Tabelle I angegeben. Die entsprechend mit zwei handelsüblichen Haftmitteln, Scotchbond® II und Gluma®, gemessenen Haftfestigkeitswerte sind zum Vergleich ebenfalls in der Tabelle enthalten.

Zur Bestimmung der Haftfestigkeit der Kunststoff-Füllung am Zahnschmelz wird auf die mit einer Diamantsäge plan gesägte, polierte, gereinigte (wässerige Äthylendiamintetraessigsäure-Lösung, pH 8,5) und getrocknete Schmelzoberfläche eines extrahierten Zahnes a) direkt oder b) nach Ätzen mit 35 %iger Phosphorsäure (Esticid® der Firma Kulzer GmbH) eines der in den Beispielen 1 und 5 beschriebenen Haftmittel aufgestrichen. Nach dem Verdunsten des Äthanols wird Estiseal®LC, ein photopolymerisierbares Versiegelungsmaterial der Firma Kulzer GmbH, aufgetragen und durch 20 Sekunden langes Bestrahlen mit dem Halogenlichtgerät Translux® der Firma Kulzer GmbH ausgehärtet. Anschließend wird Durafill, ein photopolymerisierbares Zahnfüllungsmaterial (Komposit) der Firma Kulzer GmbH, aufgebracht und durch 20 Sekunden langes Bestrahlen mit dem Halogenlichtgerät ebenfalls ausgehärtet.

Die durch Abscherversuche nach 24stündiger Lagerung in 37 °C warmem Wasser bestimmten Haftfestigkeitswerte werden in der Tabelle II angegeben. Die entsprechend mit zwei handelsüblichen Haftmitteln, Scotchbond® II und Gluma®, und ohne Anwendung eines Haftmittels gemessenen Haftfestigkeitswerte sind zum Vergleich ebenfalls in der Tabelle enthalten.

## Tabelle I

| Beispiel | Haftfestigkeit $[N/mm^2]$ | |
|---|---|---|
| | unmittelbar nach Aushärtung | nach 24stündiger Lagerung in Wasser, 37°C |
| 1 | 10,5 | 13,0 |
| 2 | 10,8 | 11,0 |
| 3 | 10,9 | 12,6 |
| 4 | 14,7 | 15,0 |
| 5 | 11.0 | 15,3 |
| 6 | 10,0 | 17,5 |
| 7 | 11,4 | 13,1 |
| 8 | 11,5 | 13,6 |
| 9 | 14,1 | 16,0 |
| 10 | 12,1 | 15,0 |
| 11 | 11,8 | 16,1 |
| 12 | 10,5 | 12,3 |
| 13 | 9,5 | 12,6 |
| 14 (Vgl.) | 3,9 | 5,4 |
| 15 (Vgl.) | 6,5 | 7,6 |
| 16 (Vgl.) | 5,0 | 6,9 |
| 17 (Vgl.) | 6,2 | 7,3 |
| Scotchbond | 2,4 | 7,1 |
| Gluma | 6,5 | 8,9 |

## Tabelle II

| Beispiel | Haftfestigkeit [N/mm$^2$] nach 24stündiger Lagerung in Wasser, 37°C |
|---|---|
| 1 | a) 7<br>b) 15 |
| 5 | a) 8<br>b) 15 |
| Scotchbond | a) 3<br>b) 11 |
| Gluma | a) 2<br>b) 11 |
| ohne Haftmittel | a) 1<br>b) 12 |

a) = ungeätzt

b) = geätzt

**Patentansprüche**

1. Dentales Haftmittel, das ein Acryloyloxyäthyl-dihydrogenphosphat und/oder Diacryloyloxyäthyl-hydrogenphosphat, einen Photopolymerisationskatalysator und ein organisches Lösungsmittel enthält, dadurch gekennzeichnet, daß es aus 1 - 25 Gewichts-% (Meth)Acryloyloxyäthyl-dihydrogenphosphat und/oder Di(meth)acryloyloxyäthyl-hydrogenphosphat, 3 - 40 Gewichts-% mindestens eines sauren Carbonsäureesters aus der Gruppe Dicarbonsäuremono(meth)acryloyloxyäthylester, o-Trimellithsäuremono(meth)acryloyloxyäthylester (1,2,4-Benzoltricarbonsäure mono(meth)acryloyloxyäthylester) und Pyromellithsäuredi(meth)acryloyloxyäthylester (1,2,4-Benzoltetracarbonsäure di (meth)acryloyloxyäthylester), 0,05 - 5 Gewichts-% des Photopolymerisationskatalysators und Äthanol als Rest besteht.

2. Haftmittel nach Anspruch 1, dadurch gekennzeichnet, daß es aus 5 - 20 Gewichts-% (Meth)Acryloyloxyäthyl-dihydrogenphosphat und/oder Di(meth)acryloyloxyäthyl-hydrogenphosphat, 5 - 30 Gewichts-% mindestens eines sauren Carbonsäureesters aus der Gruppe Dicarbonsäuremono(meth) acryloyloxyäthylester, o-Trimellithsäuremono(meth)acryloyloxyäthylester und Pyromellithsäuredi(meth) acryloyloxyäthylester, 0,1 - 2 Gewichts-% des Photopolymerisationskatalysators und Äthanol als Rest besteht.

3. Haftmittel nach Anspruch 1 oder 2, dadurch gekennzeichnet, daß die Dicarbonsäure eine Alkandicarbonsäure mit 1 - 6 C-Atomen im Alkanrest, Maleinsäure, eine Benzoldicarbonsäure oder eine Cyclohexandicarbonsäure ist.

4. Haftmittel nach einem der Ansprüche 1 bis 3, dadurch gekennzeichnet, daß es (Meth)Acryloyloxyäthyl-dihydrogenphosphat enthält.

5. Haftmittel nach einem der Ansprüche 1 bis 3, dadurch gekennzeichnet, daß es Di(meth)acryloyloxyäthyl-hydrogenphosphat enthält.

6. Haftmittel nach einem der Ansprüche 1 bis 5, dadurch gekennzeichnet, daß es zwei der sauren Carbonsäureester enthält.

7. Haftmittel nach einem der Ansprüche 1 bis 6, dadurch gekennzeichnet, daß es als sauren Carbonsäureester den Mono(meth)acryloyloxyäthylester der Bernsteinsäure enthält.

8. Haftmittel nach einem der Ansprüche 1 bis 6, dadurch gekennzeichnet, daß es als sauren Carbonsäureester Maleinsäuremono(meth)acryloyloxyäthylester und/oder Phthalsäuremono(meth)acryloyloxyäthylester enthält.

9. Haftmittel nach einem der Ansprüche 1 bis 8, dadurch gekennzeichnet, daß es als Photopolymerisationskatalysator Campherchinon enthält.

## Claims

1. A dental adhesive, which contains an acryloyloxyethyl-dihydrogenphosphate and/or diacryloyloxyethyl-hydrogenphosphate, a photopolymerisation catalyst and an organic solvent, characterised in that it consists of 1 - 25 weight % (meth)acryloyloxyethyl-dihydrogenphosphate and(or di(meth)acryloyloxyethyl-hydrogenphosphate, 3 - 40 weight % of at least one acid carboxylic acid ester from the group of dicarboxylic acid mono(meth)acryloyloxyethylesters, o-trimellitic acid mono(meth)acryloyloxyethylester (1,2,4-benzene tricarboxylic acid mono(meth)acryloyloxyethylester) and pyromellitic acid di(meth)acryloyloxyethylester (1,2,4,5-benzene tetracarboxylic acid di(meth)acryloyloxyethylester), 0.05 - 5 percentage by weight of the photopolymerisation catalyst and ethanol as the remainder.

2. An adhesive according to Claim 1, characterised in that it consists of 5 - 20 weight % (meth)acryloyloxyethyl-dihydrogenphosphate and(or di(meth)acryloyloxyethyl-hydrogenphosphate, 5 - 30 weight % of at least one acid carboxylic acid ester from the group of dicarboxylic acid mono(meth)acryloyloxyethylesters, o-trimellitic acid mono(meth)acryloyloxyethylester and pyromellitic acid di(meth)acryloyloxyethylester, 0.1 - 2 weight % of the photopolymerisation catalyst and ethanol as the remainder.

3. An adhesive according to Claim 1 or 2, characterised in that the dicarboxylic acid is an alkane dicarboxylic acid with 1 - 6 C-atoms in the alkane residue, maleic acid, a benzene dicarboxylic acid or a cyclohexane dicarboxylic acid.

4. An adhesive according to one of Claims 1 to 3, characterised in that it contains (meth)acryloyloxyethyl-dihydrogenphosphate.

5. An adhesive according to one of Claims 1 to 3, characterised in that it contains di(meth)acryloyloxyethyl-hydrogenphosphate.

6. An adhesive according to one of Claims 1 to 5, characterised in that it contains two of the acid carboxylic acid esters.

7. An adhesive according to one of Claims 1 to 6, characterised in that it contains as. the acid carboxylic acid ester the mono(meth)acryloyloxyethylester of succinic acid.

8. An adhesive according to one of Claims 1 to 6, characterised in that it contains, as the acid carboxylic acid ester, maleic acid mono(meth)acryloyloxyethylester and/or phthalic acid mono(meth)acryloyloxyethylester.

9. An adhesive according to one of Claims 1 to 8, characterised in that it contains camphorquinone as the photopolymerisation catalyst.

**Revendications**

1. Adhésif dentaire qui contient un dihydrogénophosphate d'acryloyloxyéthyle et/ou un hydrogénophosphate de diacryloyloxyéthyle, un catalyseur de photopolymérisation et un solvant organique, caractérisé en ce qu'il consiste en 1 à 25 % en poids de dihydrogénophosphate de (meth)acryloyloxyéthyle et/ou d'hydrogénophosphate de di(meth)acryloyloxyéthyle, 3 à 40 % en poids d'au moins un ester acide d'acide carboxylique du groupe d'un mono(meth)acryloyloxyéthylester d'acide dicarboxylique, du mono(meth)acryloyloxyéthylester de l'acide o-trimellitique ( du mono(meth)acryloyloxyéthylester de l'acide 1,2,4-benzènetricarboxylique ) , du di(meth)acryloyloxyéthylester de l'acide pyromellitique (du di(meth)acryloyloxyéthylester de l'acide 1,2,4,5-benzènetétracarboxylique) , 0,05 à 5 % en poids de catalyseur de photopolymérisation et en éthanol comme complément.

2. Adhésif selon la revendication 1, caractérisé en ce qu'il consiste en 5 à 20 % en poids de dihydrogénophosphate de (meth)acryloyloxyéthyle et/ou d'hydrogénophosphate de di(meth)acryloyloxyéthyle, 5 à 30 % en poids d'au moins un ester acide d'acide carboxylique du groupe d'un mono(meth)acryloyloxyéthylester d'acide dicarboxylique, du mono(meth)acryloyloxyéthylester de l'acide o-trimellitique et du di(meth)acryloyloxyéthylester de l'acide pyromellitique, 0,1 à 2 % en poids de catalyseur de photopolymérisation et en éthanol comme complément.

3. Adhésif selon la revendication 1 ou 2, caractérisé en ce que l'acide dicarboxylique est un acide alcanedicarboxylique contenant 1 à 6 atomes de carbone dans le reste alcane, l'acide maléique, un acide benzènedicarboxylique ou un acide cyclohexanedicarboxylique.

4. Adhésif selon l'une des revendications 1 à 3, caractérisé en ce qu'il contient du dihydrogénophosphate de (meth)acryloyloxyéthyle.

5. Adhésif selon l'une des revendications 1 à 3, caractérisé en ce qu'il contient de l'hydrogénophosphate de di(meth)acryloyloxyéthyle.

6. Adhésif selon l'une des revendications 1 à 5, caractérisé en ce qu'il contient deux des esters acides d'acide carboxylique.

7. Adhésif selon l'une des revendications 1 à 6, caractérisé en ce qu'il contient comme ester acide d'acide carboxylique le mono(meth)acryloyloxyéthylester de l'acide succinique.

8. Adhésif selon l'une des revendications 1 à 6, caractérisé en ce qu'il contient comme ester acide d'acide carboxylique le mono(meth)acryloyloxyéthylester de l'acide maléique et/ou le mono(meth)acryloyloxyéthylester de l'acide phtalique.

9. Adhésif selon l'une des revendications 1 à 8, caractérisé en ce qu'il contient comme catalyseur de pho-topolymérisation la camphoquinone.